# FASCICULE DE BREVET EUROPEEN

(11) **EP 3 505 402 B1**
(45) Date de publication et mention de la délivrance du brevet: **29.06.2022**
(21) Numéro de dépôt: 18211907.3
(22) Date de dépôt: 12.12.2018
(51) Int. Cl.: B60R 16/02, B60T 8/17

(54) **HARNAIS ÉLECTRIQUE**
ELEKTRISCHES SEILGURTZEUG
ELECTRICAL HARNESS

(30) Priorité: 14.12.2017 FR 1762155
(43) Date de publication de la demande: 03.07.2019
(73) Titulaire: Safran Landing Systems, 78140 Vélizy-Villacoublay (FR)
(72) Inventeur: FREY, Olivier, 78140 VELIZY-VILLACOUBLAY (FR)
(74) Mandataire: Lavaud, Thomas

(56) Documents cités:
- EP-A1- 2 282 228
- EP-A1- 2 719 592
- WO-A1-00/70723
- US-A- 5 990 573
- US-A1- 2012 330 597
- US-A1- 2013 338 846
- US-A1- 2017 152 022
- US-A1- 2017 152 027

## Description

L'invention concerne le domaine des harnais électriques.

### ARRIERE PLAN DE L'INVENTION

Un système de freinage électrique d'aéronef comprend une pluralité de freins destinés chacun à freiner une roue d'un atterrisseur de l'aéronef.

Chaque frein comporte un porte-actionneurs sur lequel sont montés des actionneurs électromécaniques comprenant chacun un moteur électrique qui est typiquement un moteur électrique triphasé.

Dans les architectures centralisées classiques de système de freinage électrique, les actionneurs électromécaniques sont regroupés en une pluralité de groupes. Les actionneurs électromécaniques d'un même groupe sont reliés à un même calculateur situé dans le fuselage de l'aéronef.

Le moteur électrique de chaque actionneur électromécanique reçoit un courant électrique triphasé d'alimentation provenant du calculateur auquel l'actionneur électromécanique est connecté, et chaque actionneur électromécanique transmet des mesures d'un paramètre d'asservissement au calculateur, par exemple des mesures d'une position angulaire du rotor du moteur électrique. Les calculateurs mettent en œuvre des fonctions de contrôle et de commande des actionneurs électromécaniques, ainsi que des fonctions de génération de puissance qui utilisent des onduleurs.

On constate qu'une telle architecture centralisée nécessite l'utilisation d'un nombre très élevé de fils électriques. La masse des câbles électriques du système de freinage électrique est donc très importante.

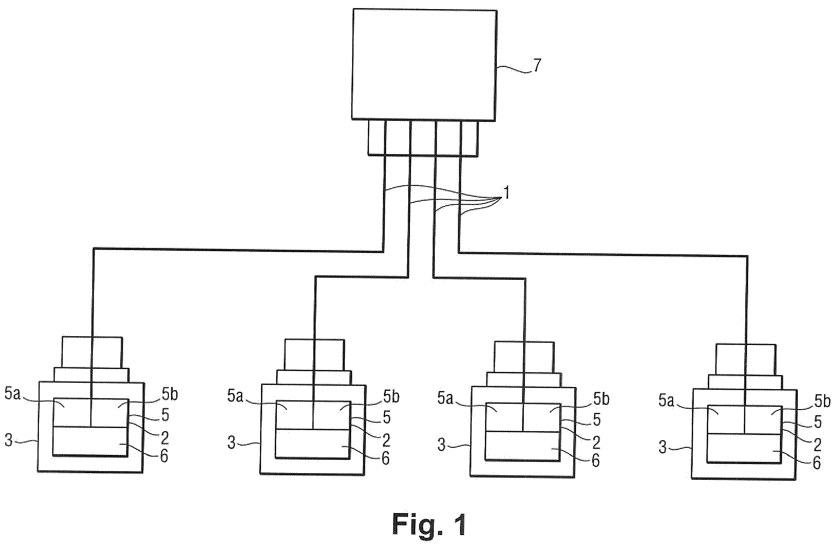

En référence à la figure 1, pour réduire le nombre de fils électriques et donc la masse des câbles électriques 1, on envisage d'intégrer un module électronique 2 dans chaque actionneur électromécanique 3 pour piloter le moteur électrique de l'actionneur électromécanique 3.

Le module électronique 2 comporte une unité électronique numérique 5 et une unité électronique analogique 6.

L'unité électronique numérique 5 reçoit du calculateur 7 des signaux numériques de pilotage et réalise un traitement sur les signaux numériques de pilotage. Les signaux numériques de pilotage sont par exemple des signaux numériques de commande de freinage, et le traitement consiste par exemple à mettre en œuvre des boucles d'asservissement de pilotage de moteur pour produire des signaux numériques de commande de moteur. L'unité électronique numérique 5 convertit alors les signaux numériques de commande de moteur en signaux analogiques de commande de moteur.

L'unité électronique analogique 6 transforme les signaux analogiques de commande de moteur en un courant électrique triphasé d'alimentation à destination des phases du moteur électrique de l'actionneur électromécanique 3.

Ainsi, les signaux numériques de commande de freinage sont transmis via un bus numérique qui chemine le long de l'atterrisseur, ce qui réduit le nombre de fils électriques.

Les exigences de sûreté de fonctionnement, ainsi que l'exigence de ne disposer que d'une seule référence d'actionneur électromécanique 3 pour l'ensemble du système de freinage électrique, imposent d'équiper chaque actionneur électromécanique 3 de deux unités électroniques numériques 5a, 5b. Les deux unités électroniques numériques 5a, 5b sont possiblement dissimilaires.

On augmente alors le nombre de composants électroniques du module électronique 2 à l'intérieur de l'actionneur électromécanique 3, ce qui pose des problèmes d'intégration dans l'espace disponible.

De plus, une défaillance mécanique quelconque d'un actionneur électromécanique 3 oblige bien sûr à déposer et à remplacer l'ensemble de l'actionneur électromécanique 3, c'est à dire à la fois la partie mécanique de l'actionneur électromécanique 3 et le module électronique 2 intégré dans l'actionneur électromécanique 3. Or, comme le module électronique 2 est complexe et que les composants électroniques sont coûteux, le remplacement du module électronique 2 engendre un coût important alors que le module électronique 2 demeure fonctionnel.

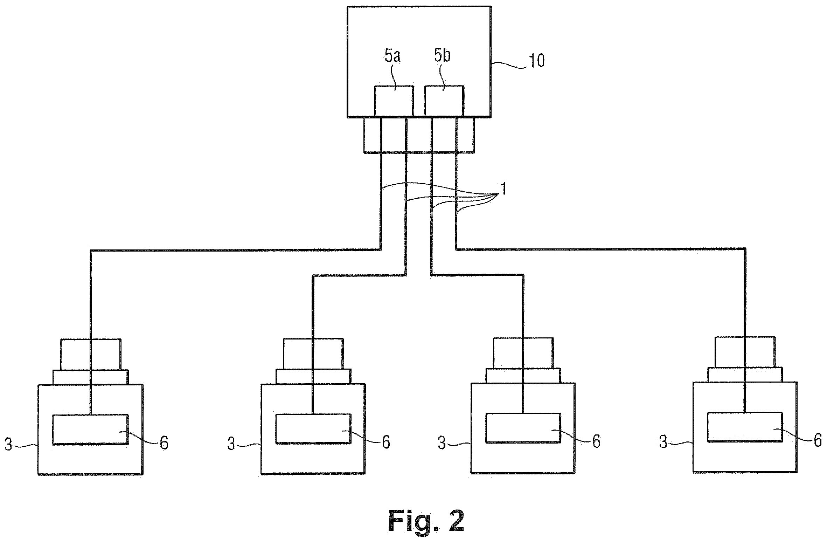

En référence à la figure 2, une solution envisagée pour pallier ces inconvénients consiste à déporter les unités électroniques numériques 5a, 5b dans un calculateur 10 placé le plus proche possible des actionneurs électromécaniques 3, par exemple sur l'atterrisseur. Cependant, le transport des signaux analogiques de commande de moteur nécessite à nouveau d'augmenter le nombre de fils électriques, et donc la masse des câbles électriques 1 du système de freinage électrique.

Le document WO00/70723 A1 divulgue un faisceau de câbles utilisé dans une installation électrique sur réseau où un ou plusieurs circuits électroniques multiplexés sont contenus dans le faisceau de câbles.

### OBJET DE L'INVENTION

L'invention a pour objet de réduire la masse des câbles électriques d'un système de freinage électrique, de simplifier la conception et de réduire les coût de maintenance des actionneurs électromécaniques, tout en conservant une seule référence d'actionneur électromécanique pour l'ensemble du système de freinage électrique.

### RESUME DE L'INVENTION

En vue de la réalisation de ce but, on propose un harnais électrique comportant au moins un connecteur amont agencé pour être relié électriquement à un calculateur, au moins un connecteur aval agencé pour être connecté à un connecteur complémentaire d'un actionneur électromécanique, et au moins un fil électrique reliant électriquement le connecteur amont et le connecteur aval, le fil électrique étant agencé de sorte que des signaux numériques de commande primaires produits ou transférés par le calculateur cheminent sur le fil électrique via le connecteur amont, le harnais électrique comportant en outre une unité électronique intégrée dans le harnais électrique, l'unité électronique étant agencée pour transformer les signaux numériques de commande primaires en signaux analogiques de commande et pour transmettre les signaux analogiques de commande à l'actionneur électromécanique via le connecteur aval.

Les signaux de commande des actionneurs électromécaniques (c'est-à-dire les signaux numériques de commande primaires) peuvent être transmis sur une longueur importante du harnais électrique sous forme numérique, ce qui permet de réduire la masse des câbles électriques que comporte le harnais électrique.

Comme l'unité électronique n'est pas intégrée dans l'actionneur électromécanique, une défaillance mécanique quelconque de l'actionneur électromécanique n'impose pas de remplacer l'unité électronique. De même, une défaillance de l'unité électronique n'impose pas de remplacer l'actionneur électromécanique. On simplifie ainsi la conception et on réduit les coûts de maintenance des actionneurs électromécaniques.

De plus, si une redondance et/ou une dissimilarité de l'unité électronique sont nécessaires, celles-ci peuvent être mises en œuvre dans le harnais électrique et non dans l'actionneur électromécanique. Il n'est donc pas nécessaire d'avoir deux références d'actionneur électromécanique dans un aéronef, ni d'intégrer deux unités électroniques au sein d'un même actionneur électromécanique.

On propose de plus un harnais électrique tel que celui qui vient d'être décrit, dans lequel l'unité électronique est intégrée dans le connecteur aval.

On propose de plus un harnais électrique tel que celui qui vient d'être décrit, dans lequel l'unité électronique est intégrée partiellement dans le connecteur aval et partiellement dans le connecteur amont.

On propose en outre un harnais électrique tel que celui qui vient d'être décrit, comportant deux connecteurs aval et deux unités électroniques associées chacune à l'un des deux connecteurs aval et donc à un actionneur électromécanique distinct, les deux unités électroniques différant l'une de l'autre par au moins un composant électrique.

On propose de plus un harnais électrique tel que celui qui vient d'être décrit, dans lequel l'unité électronique comporte un composant de traitement, un convertisseur analogique-numérique et un convertisseur numérique-analogique, le convertisseur analogique-numérique étant agencé pour convertir des signaux analogiques de mesure provenant de l'actionneur électromécanique de manière à obtenir des signaux numériques de mesure, le composant de traitement étant agencé pour mettre en œuvre une boucle d'asservissement, utilisant les signaux numériques de mesure, qui transforme les signaux numériques de commande primaires en signaux numériques de commande de moteur, et le convertisseur numérique-analogique étant agencé pour convertir les signaux numériques de commande de moteur de manière à obtenir les signaux analogiques de commande.

On propose par ailleurs un système comprenant un calculateur, un actionneur électromécanique et un harnais électrique tel que celui qui vient d'être décrit.

On propose de plus un système tel que celui qui vient d'être décrit, le système étant un système de freinage électrique d'aéronef.

D'autres caractéristiques et avantages de l'invention ressortiront à la lecture de la description qui suit d'un mode de réalisation particulier, non limitatif de l'invention.

### BREVE DESCRIPTION DES DESSINS

Il sera fait référence aux dessins annexés parmi lesquels :
- la figure 1 représente une première architecture de système de freinage électrique de l'art antérieur ;
- la figure 2 représente une deuxième architecture de système de freinage électrique de l'art antérieur ;
- la figure 3 représente une architecture de système de freinage électrique utilisant un harnais électrique selon l'invention.

### DESCRIPTION DETAILLEE DE L'INVENTION

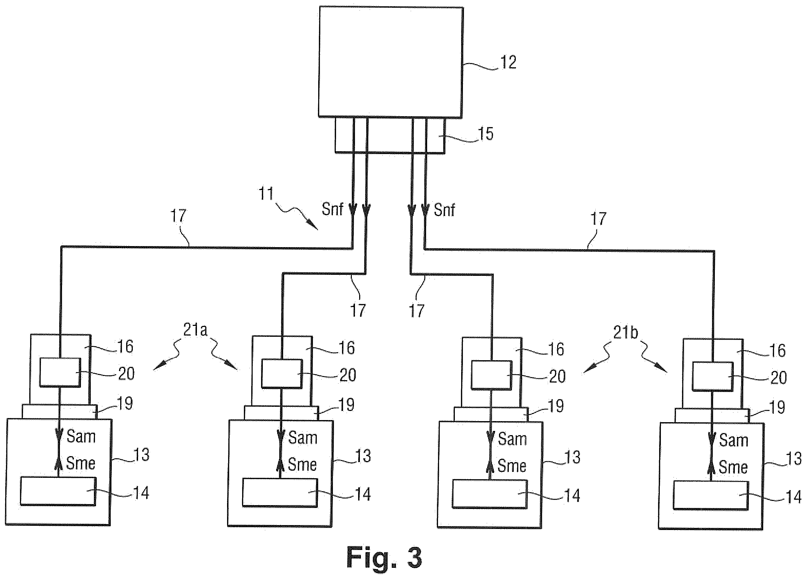

En référence à la figure 3, un harnais électrique selon l'invention 11 est ici utilisé dans un système de freinage électrique d'un aéronef.

Outre le harnais électrique 11, le système de freinage électrique comporte un calculateur 12, une unité d'alimentation (non représentée), et un frein d'une roue d'un atterrisseur principal de l'aéronef.

Le calculateur 12, intégré dans un réseau avionique de l'aéronef, est positionné dans une baie située dans le fuselage de l'aéronef.

Le calculateur 12 acquiert un ordre de freinage, généré par exemple par un pilote de l'aéronef ou par un système de freinage automatique, et transforme l'ordre de freinage en une consigne de freinage. Le calculateur 12 met en œuvre des lois de commande de freinage de haut niveau, comprenant des boucles lentes, pour produire, à partir de la consigne de freinage des signaux numériques de commande primaires, en l'occurrence des signaux numériques de commande de freinage Snf.

L'unité d'alimentation est ici un bus de puissance transportant une puissance électrique provenant d'un générateur d'énergie électrique de l'aéronef ou de moyens de stockage d'énergie électrique de l'aéronef, ou bien un boîtier de conversion de puissance relié au bus de puissance. Un tel boîtier de conversion de puissance est aussi parfois appelé PSU, pour *Power Supply Unit.*

L'unité d'alimentation génère une puissance électrique d'alimentation, c'est à dire un courant électrique d'alimentation sous une tension électrique d'alimentation. La tension électrique d'alimentation est une tension continue.

Le frein comporte un porte-actionneurs sur lequel sont montés quatre actionneurs électromécaniques 13, et des organes de friction, en l'occurrence une pile de disques de carbone.

Les quatre actionneurs électromécaniques 13 sont utilisés pour appliquer un effort de freinage sur la pile de disques de carbone et exercer ainsi un couple de freinage sur la roue qui ralentit la rotation de la roue et donc freine l'aéronef lorsque celui-ci est au sol.

Chaque actionneur électromécanique 13 comporte un corps fixé au porte-actionneurs et un poussoir.

Une unité analogique de puissance 14, un moteur électrique et un module mécanique (non représentés) sont intégrés à l'intérieur du corps de l'actionneur électromécanique 13.

L'unité analogique de puissance 14 comporte des composants électriques réalisant une conversion de puissance continue en puissance alternative, notamment des onduleurs, et des composants électriques de filtrage. L'unité analogique de puissance 14 génère ainsi, à partir de la tension électrique d'alimentation produite par l'unité d'alimentation et à partir de signaux analogiques de commande de moteur Sam, des courants électriques triphasés circulant dans des enroulements d'un stator du moteur électrique. Le module mécanique transforme un mouvement de rotation d'un arbre de sortie du moteur électrique en un mouvement linéaire du poussoir.

Le poussoir est actionné par le moteur électrique, via le module mécanique, pour coulisser et appliquer l'effort de freinage sur la pile de disques de carbone.

Chaque actionneur électromécanique 13 comporte de plus un organe de blocage (non représenté) permettant de mettre en œuvre un freinage de parc. L'organe de blocage est agencé pour maintenir l'arbre de sortie du moteur électrique dans une position donnée, de manière à bloquer en position le poussoir.

L'actionneur électromécanique 13 comporte en outre des capteurs qui réalisent des mesures de paramètres de fonctionnement de l'actionneur électromécanique, pour produire des signaux analogiques de mesure Sme. Les mesures réalisées comprennent des mesures de courant, des mesures de tension, et des mesures de position angulaire d'un rotor du moteur électrique.

Le calculateur 12 et les quatre actionneurs électromécaniques 13 du frein sont reliés par le harnais électrique 11.

Par « harnais électriques », on entend ici un faisceau de câbles électriques et des connecteurs.

Par « câble électrique », on entend un ensemble comprenant un ou plusieurs fils électriques (ou conducteurs électriques), et une gaine.

Par « gaine », on entend ici toute couche qui sépare de l'extérieur le ou les fils électriques d'un câble électrique, ou bien qui sépare de l'extérieur plusieurs câbles électriques regroupés. Les couches comprennent par exemple un blindage (tel qu'une une tresse conductrice), un diélectrique, une couche isolante, une gaine thermorétractable, etc.

Le harnais électrique 11 comporte un connecteur amont 15, quatre connecteurs aval 16, et quatre câbles électriques 17.

Le connecteur amont 15 est relié électriquement au calculateur 12. Le connecteur amont 15 est ici connecté directement à un connecteur complémentaire du calculateur 12.

Chaque connecteur aval 16 est relié électriquement à un actionneur électromécanique 13. Chaque connecteur aval 16 est connecté directement à un connecteur complémentaire 19 d'un actionneur électromécanique 13.

Les quatre câbles électriques 17 comprennent des fils électriques qui relient électriquement le connecteur amont 15 et les connecteurs aval 16. Les quatre câbles électriques 17 sont regroupés à l'intérieur d'une même gaine sur une longueur partielle du harnais électrique 11. La longueur partielle correspond au parcours du harnais électrique 11, lorsque celui-ci est intégré dans l'aéronef, entre le calculateur 12 et le frein de la roue située au bas de l'atterrisseur principal. Les quatre câbles électriques 17 sont donc regroupés entre le calculateur 12 et le frein, et séparés les uns des autres à l'endroit où le harnais électrique 11 est connecté sur le frein.

Le harnais électrique 11 comporte de plus quatre unités électroniques 20.

Chaque unité électronique 20 comporte une carte électrique sur laquelle des composants électriques sont montés. Chaque unité électronique 20 est ici intégrée dans un connecteur aval 16. La carte électrique de chaque unité électronique 20 est miniaturisée. La miniaturisation utilise des procédés et des technologies de micro-électronique à haute densité, du type *System on Chip, Multi-Chip Module, 3D Packaging.*

Grâce à cette miniaturisation, l'intégration de l'unité électronique 20 dans le connecteur aval 16 n'implique pas de modifier la taille dudit connecteur aval 16. Chaque connecteur aval 16 présente donc un volume et un encombrement externes semblables à ceux des connecteurs qui, traditionnellement, permettent de connecter un câble électrique à un actionneur électromécanique de freinage.

La carte électrique de chaque unité électronique 20 comporte un composant de traitement, un convertisseur numérique-analogique et un convertisseur analogique-numérique.

Le composant de traitement est ici un microcontrôleur, mais pourrait être un composant différent, par exemple un processeur, un FPGA, un ASIC, etc.

Le convertisseur analogique-numérique acquiert les signaux analogiques de mesure Sme et les convertit en signaux numériques de mesure.

Le composant de traitement acquiert les signaux numériques de commande de freinage Snf et les mesures de position angulaire du rotor du moteur électrique (comprises dans les signaux numériques de mesure), et met en œuvre des boucles d'asservissement rapides de pilotage de moteur, pour produire des signaux numériques de commande de moteur.

Le convertisseur numérique-analogique convertit les signaux numériques de commande de moteur en signaux analogiques de commande de moteur Sam. Les signaux analogiques de commande de moteur Sam sont alors transmis à l'unité analogique de puissance 14 de l'actionneur électromécanique 13, qui, à partir des signaux analogiques de commande de moteur Sam, génère les courants électriques triphasés qui circulent dans des enroulements d'un stator du moteur électrique.

On remarque que les actionneurs électromécaniques 13 sont regroupés en deux groupes distincts d'actionneurs électromécaniques 13. Les unités électroniques 20 sont donc aussi regroupées en deux groupes distincts 21a, 21b d'unités électroniques 20. Les deux unités électroniques 20 d'un même groupe 21 sont dissimilaires, c'est à dire qu'elles sont différentes dans leur conception. En l'occurrence, les deux unités électroniques 20 d'un même groupe 21 diffèrent l'une de l'autre par au moins un composant électrique, qui est ici le composant de traitement. La dissimilarité permet d'éviter qu'une panne de mode commun du composant de traitement ne puisse conduire à la perte totale du freinage de la roue.

L'utilisation du harnais électrique 11 selon l'invention permet donc de bénéficier à la fois des avantages d'une solution avec une unité électronique numérique déportée dans un calculateur de proximité, et des avantages d'une solution avec une unité électronique numérique intégrée dans l'actionneur électromécanique.

L'unité électronique 20 du harnais électrique 11 est en effet rapprochée de l'actionneur électromécanique 3, et la liaison numérique est prolongée jusqu'à l'actionneur électromécanique 3, sans être directement intégrée dans l'actionneur électromécanique 3.

Le harnais électrique 11 permet d'adjoindre à un actionneur électromécanique 3 préexistant, déjà intégré dans un système de freinage électrique, une interface numérique, qui est l'unité électronique 20. Cette interface numérique permet de commander les actionneurs électromécaniques 3 grâce à des signaux numériques (signaux numériques de commande de freinage Snf et signaux numériques de commande de moteur), qui circulent via des bus numériques, plus simples à mettre en œuvre.

L'interface numérique permet aussi de numériser les signaux analogiques de mesure Sam, qui peuvent être transmis sur un réseau numérique connecté à un réseau de l'aéronef. On obtient donc un système de freinage électrique moins analogique et plus numérique grâce à une solution relativement simple.

La numérisation des signaux permet aussi de partager plus facilement des informations entre équipements (calculateurs, actionneurs électromécaniques, etc.), tout en minimisant le nombre de fils électriques supplémentaires.

L'utilisation du harnais électrique 11 permet aussi de réaliser des diagnostics d'actionneurs électromécaniques et de capteurs (intégrés ou connectés aux actionneurs électromécaniques) qui ne pouvaient pas être diagnostiqués dans les systèmes de l'art antérieur.

On note que cette solution est adaptée aux environnements avec un espace d'intégration contraint et limité, ne permettant pas d'intégrer un boîtier électronique supplémentaire.

Cette solution permet aussi de réduire le nombre de fils électriques dans le harnais électrique 11 reliant un calculateur 12 aux actionneurs électromécaniques 3 (car les signaux cheminent principalement sous forme numérique). La solution offre aussi une souplesse d'évolution permettant d'ajouter des fonctionnalités (et notamment des échanges de nouvelles informations) sans qu'il soit nécessaire d'ajouter des fils électriques.

Grâce au harnais électrique 11, la partie électronique de conditionnement, de traitement et de communication (c'est à dire l'unité électronique 20), est indépendante de la partie électromécanique de l'actionneur électromécanique (c'est à dire l'unité analogique de puissance 14, le module mécanique et le moteur électrique). En cas de défaillance de l'une des parties, seule la partie défaillante est remplacée.

Les exigences de sûreté de fonctionnement sont remplies par la possibilité d'utiliser des unités électroniques 20 distinctes au sein d'un même harnais électrique 11. L'exigence de n'utiliser qu'une seule référence d'actionneur électromécanique 3 pour tous les freins de l'aéronef est aussi remplie.

L'invention n'est pas limitée au mode de réalisation particulier qui vient d'être décrit, mais, bien au contraire, couvre toute variante entrant dans le cadre de l'invention tel que défini par les revendications.

On a indiqué ici que chaque unité électronique est intégrée dans un connecteur aval. Or, les unités électroniques peuvent être intégrées différemment dans le harnais électrique. Une unité électronique peut par exemple être intégrée partiellement dans un connecteur amont et partiellement dans un connecteur aval. Une unité électronique peut aussi comporter des composants situés à l'intérieur d'une gaine du harnais électrique, entre un connecteur amont et un connecteur aval. Une unité électronique peut aussi être comprise dans un boîtier, éventuellement flexible, qui s'étend au moins partiellement à l'extérieur du harnais électrique autour d'une gaine du harnais électrique.

On a décrit que le connecteur amont du harnais électrique est connecté directement à un connecteur complémentaire du calculateur. Le connecteur amont pourrait aussi être relié électriquement au calculateur, mais pas directement, par exemple via un autre harnais électrique ou un autre câble électrique. Le connecteur amont n'est d'ailleurs pas nécessairement un véritable « connecteur », mais pourrait être un simple élément conducteur de connexion (tel qu'une extrémité d'un fil électrique du harnais électrique) grâce auquel le harnais électrique est connecté au calculateur.

On a indiqué que deux unités électroniques d'un même groupe sont dissimilaires et que la dissimilarité provient de composants de traitement différents. La dissimilarité, qui n'est pas obligatoire, peut aussi provenir d'autre(s) composant(s), et peut être une dissimilarité matérielle *(hardware)* et/ou logicielle (*software*)*.*

On a décrit un calculateur relié, via le harnais électrique, à quatre actionneurs électromécaniques d'un frein. Une même unité d'alimentation est aussi reliée aux quatre actionneurs électromécaniques. L'invention s'applique bien sûr à des architectures différentes. Les actionneurs électromécaniques d'un même frein ne sont pas nécessairement reliés à un même calculateur ou à une même unité d'alimentation, un frein peut comporter un nombre différent d'actionneurs électromécaniques, un calculateur peut être connecté à des actionneurs électromécaniques de freins de différentes roues, voire même de roues de différents atterrisseurs, etc.

On a décrit que le calculateur est positionné dans une baie située dans le fuselage de l'aéronef. Le calculateur pourrait être positionné à un autre endroit, par exemple sur l'atterrisseur. Le calculateur pourrait être intégré dans un boîtier de jonction de l'atterrisseur, dont la fonction initiale est de réaliser des connexions entre des câbles cheminant sur l'atterrisseur et des équipements de l'atterrisseur.

La structure du harnais électrique peut par conséquent différer de celle décrite. L'invention s'applique bien sûr à un harnais électrique comprenant un nombre de connecteurs et un nombre de câbles différents.

L'invention peut par ailleurs être mise en œuvre dans un système de freinage d'un véhicule autre qu'un aéronef. Le véhicule peut être par exemple une automobile, une motocyclette, un train, etc. L'invention peut aussi être mise en œuvre dans un système autre qu'un système de freinage. L'invention s'applique à tout système comprenant des actionneurs électromécaniques reliés à un calculateur quelconque. Le « calculateur » peut aussi avoir un rôle différent de celui décrit ici.

Par « calculateur », on entend ainsi tout équipement électrique susceptible de produire des signaux numériques de commande à destination de l'actionneur électromécanique, ou bien tout équipement électrique susceptible de transférer des signaux numériques de commande à destination de l'actionneur électromécanique. Ainsi, le calculateur pourrait très bien être un simple commutateur numérique qui transfère des signaux numériques de commande générés en amont du calculateur.

## Revendications

1. Harnais électrique (11) comportant au moins un connecteur amont (15) agencé pour être relié électriquement à un calculateur (12), au moins un connecteur aval (16) agencé pour être connecté à un connecteur complémentaire (19) d'un actionneur électromécanique (13), et au moins un fil électrique reliant électriquement le connecteur amont et le connecteur aval, le fil électrique étant agencé de sorte que des signaux numériques de commande primaires (Snf) produits ou transférés par le calculateur cheminent sur le fil électrique via le connecteur amont, le harnais électrique comportant en outre au moins une unité électronique (20) intégrée dans le harnais électrique, l'unité électronique étant agencée pour transformer les signaux numériques de commande primaires en signaux analogiques de commande (Sam) et pour transmettre les signaux analogiques de commande à l'actionneur électromécanique via le connecteur aval.

2. Harnais électrique selon la revendication 1, dans lequel l'unité électronique (20) est intégrée dans le connecteur aval (16).

3. Harnais électrique selon la revendication 1, dans lequel l'unité électronique (20) est intégrée partiellement dans le connecteur aval (16) et partiellement dans le connecteur amont (15).

4. Harnais électrique selon la revendication 1, comportant deux connecteurs aval (16) et deux unités électroniques (20) associées chacune à l'un des deux connecteurs aval et donc à un actionneur électromécanique (13) distinct, les deux unités électroniques différant l'une de l'autre par au moins un composant électrique.

5. Harnais électrique selon la revendication 1, dans lequel l'unité électronique comporte un composant de traitement, un convertisseur analogique-numérique et un convertisseur numérique-analogique, le convertisseur analogique-numérique étant agencé pour convertir des signaux analogiques de mesure (Sme) provenant de l'actionneur électromécanique (13) de manière à obtenir des signaux numériques de mesure, le composant de traitement étant agencé pour mettre en œuvre une boucle d'asservissement, utilisant les signaux numériques de mesure, qui transforme les signaux numériques de commande primaires (Snf) en signaux numériques de commande de moteur, et le convertisseur numérique-analogique étant agencé pour convertir les signaux numériques de commande de moteur de manière à obtenir les signaux analogiques de commande (Sam).

6. Système comprenant un calculateur (12), un actionneur électromécanique (13) et un harnais électrique (11) selon l'une des revendications précédentes.

7. Système selon la revendication 6, le système étant un système de freinage électrique d'aéronef.

## Patentansprüche

1. Elektrischer Kabelbaum (11), umfassend mindestens einen stromaufwärtigen Steckverbinder (15), der ausgebildet ist, um elektrisch mit einem Rechner (12) verbunden zu werden, mindestens einen stromabwärtigen Steckverbinder (16), der ausgebildet ist, um mit einem komplementären Steckverbinder (19) eines elektromechanischen Aktors (13) verbunden zu werden, und mindestens einen elektrischen Draht, der den stromaufwärtigen Steckverbinder und den stromabwärtigen Steckverbinder elektrisch verbindet, wobei der elektrische Draht derart ausgebildet ist, dass von dem Rechner erzeugte oder übertragene primäre digitale Steuersignale (Snf) über den stromaufwärtigen Steckverbinder auf dem elektrischen Draht wandern, wobei der elektrische Kabelbaum ferner mindestens eine in den elektrischen Kabelbaum integrierte elektronische Einheit (20) umfasst, wobei die elektronische Einheit ausgebildet ist, um die primären digitalen Steuersignale in analoge Steuersignale (Sam) umzuwandeln und die analogen Steuersignale über den stromabwärtigen Steckverbinder an den elektromechanischen Aktor zu übertragen.

2. Elektrischer Kabelbaum nach Anspruch 1, bei dem die elektronische Einheit (20) in den stromabwärtigen Steckverbinder (16) integriert ist.

3. Elektrischer Kabelbaum nach Anspruch 1, bei dem die elektronische Einheit (20) teilweise in den stromabwärtigen Steckverbinder (16) und teilweise in den stromaufwärtigen Steckverbinder (15) integriert ist.

4. Elektrischer Kabelbaum nach Anspruch 1, umfassend zwei stromabwärtige Steckverbinder (16) und zwei elektronische Einheiten (20), die jeweils mit einem der beiden stromabwärtigen Steckverbinder und folglich mit einem getrennten elektromechanischen Aktor (13) verbunden sind, wobei sich die beiden elektronischen Einheiten voneinander durch mindestens eine elektrische Komponente unterscheiden,

5. Elektrischer Kabelbaum nach Anspruch 1, bei dem die elektronische Einheit eine Verarbeitungskomponente, einen Analog-Digital-Wandler und einen Digital-Analog-Wandler umfasst, wobei der Analog-Digital-Wandler ausgebildet ist, um analoge Messsignale (Sme), die aus dem elektromechanischen Aktor (13) stammen, so umzuwandeln, dass digitale Messsignale erhalten werden, wobei die Verarbeitungskomponente ausgebildet ist, um einen Regelkreis zu implementieren, der die digitalen Messsignale nutzt und die primären digitalen Steuersignale (Snf) in digitale Motorsteuersignale umwandelt, und wobei der Digital-Analog-Wandler ausgebildet ist, um die digitalen Motorsteuersignale so umzuwandeln, dass die analogen Steuersignale (Sam) erhalten werden,

6. System, umfassend einen Rechner (12), einen elektromechanischen Aktor (13) und einen elektrischen Kabelbaum (11) nach einem der vorhergehenden Ansprüche.

7. System nach Anspruch 6, wobei das System ein elektrisches Bremssystem für ein Luftfahrzeug ist.

## Claims

1. An electrical harness (11) including at least one upstream connector (15) arranged to be electrically connected to a computer (12), at least one downstream connector (16) arranged to be connected to a complementary connector (19) of an electromechanical actuator (13), and at least one electric wire electrically connecting together the upstream connector and the downstream connector, the electric wire being arranged so that primary digital control signals (Snf) produced or transferred by the computer travel over the electric wire via the upstream connector, the electrical harness also including at least one electronic unit (20) integrated in the electrical harness, the electronic unit being arranged to transform the primary digital control signals into analog control signals (Sam) and to transmit the analog control signals to the electromechanical actuator via the downstream connector.

2. An electrical harness according to claim 1, wherein the electronic unit (20) is integrated in the downstream connector (16).

3. An electrical harness according to claim 1, wherein the electronic unit (20) is integrated in part in the downstream connector (16) and in part in the upstream connector (15).

4. An electrical harness according to claim 1, including two downstream connectors (16) and two electronic units (20), each associated with a different one of the two downstream connectors, and thus with a different electromechanical actuator (13), the two electronic units differing from each other by at least one electrical component.

5. An electrical harness according to claim 1, wherein the electronic unit includes a processor unit, an analog-to-digital converter, and a digital-to-analog converter, the analog-to-digital converter being arranged to convert analog measurement signals (Sme) coming from the electromechanical actuator (13) so as to obtain digital measurement signals, the processor unit being arranged to implement a servo-control loop making use of the digital measurement signals to transform the primary digital control signals (Snf) into digital motor control signals, and the digital-to-analog converter being arranged to convert the digital motor control signals so as to obtain the analog control signals (Sam).

6. A system comprising a computer (12), an electromechanical actuator (13), and an electrical harness (11) according to any preceding claim.

7. A system according to claim 6, the system being an aircraft electrical braking system.
